# EUROPÄISCHE PATENTSCHRIFT

(11) **EP 2 228 885 B1**
(45) Veröffentlichungstag und Bekanntmachung des Hinweises auf die Patenterteilung: **05.04.2017**
(21) Anmeldenummer: 10001887.8
(22) Anmeldetag: 24.02.2010
(51) Int. Cl.: H02J 13/00, H05B 37/00

(54) **Master/Slave-System mit mindestens zwei Bewegungsmelder-Einheiten und Verfahren zum Betrieb eines solchen Master/Slave-Systems**
Master/slave system with at least two motion sensor units and method for operating same
Système maître/esclave doté d'au moins deux unités de détection de mouvement et procédé de fonctionnement d'un tel système maître/esclave

(30) Priorität: 14.03.2009 DE 102009013289
(43) Veröffentlichungstag der Anmeldung: 15.09.2010
(73) Patentinhaber: ABB AG, 68309 Mannheim (DE)
(72) Erfinder: Rümenapf, Peter Dipl-Ing., 58579 Schalksmühle (DE); Bui, Huu Bang Dipl.-Ing., 44149 Dortmund (DE); Czimmeck, Frank Dipl.-Ing., 58511 Lüdenscheid (DE)

(56) Entgegenhaltungen:
- EP-A1- 0 345 493
- EP-A1- 0 588 274
- EP-A1- 1 857 938
- EP-A2- 0 406 718
- EP-A2- 0 993 094
- DE-B3-102005 014 133
- US-B1- 6 788 953

## Beschreibung

Die Erfindung betrifft ein Master/Slave-System mit mindestens zwei Bewegungsmelder-Einheiten sowie ein Verfahren zum Betrieb eines solchen Master/Slave-Systems. Aus der DE 10 2006 033 765 B3 ist ein Dimmersystem mit mehreren Dimmern bekannt, die automatisch und temporär die Funktion als Master-Dimmer, als Slave-Dimmer und als Nebenstelle übernehmen können. Die Bedienung an einem beliebigen Multidimmer führt automatisch zur temporären Übernahme der Funktion als Master-Dimmer, wodurch das Steuersignal des Bedienelementes den aktuellen Sollwert für das Dimmersystem vorgibt und der Phasenwinkel dementsprechend in gewünschter Weise verändert wird. Die weiteren Multidimmer des Dimmersystems erkennen über ihre Verarbeitungs- und Steuereinrichtungen die Differenz zwischen gegenwärtigem und neu eingestelltem Phasenwinkel. Folglich übernehmen sie automatisch und temporär die Funktion von Slave-Dimmern und regeln ihre Phasenwinkel nach.

Weiterer Stand der Technik ist aus EP 0 993 094 A2 bekannt.

Wenn Unterputz-Schaltgeräte (beispielsweise Bewegungsmelder, Jalousieschalter, Lüfterschalter) oder Dimmer als Hauptstelle respektive Master betrieben werden, ist es möglich, diese Geräte / Dimmer zusätzlich auch über eine Nebenstellenleitung von einem entfernt montierten Nebenstellentaster oder von einem (elektronischen) Nebenstellengerät anzusteuern. Dabei dient die Hauptstelle respektive Master zum Schalten oder Dimmen eines elektrischen Verbrauchers, insbesondere einer Beleuchtungseinheit, eines Jalousiemotors oder eines Lüfters, und die räumlich entfernte Nebenstelle (Nebenstellentaster oder elektronisches Nebenstellengerät respektive Slave) erzeugt lediglich ein Nebenstellensignal zur Steuerung der Hauptstelle.

Das Bezugspotential einer konventionellen Nebenstellenanordnung ist meist der Nulleiter oder die an der Hauptstelle respektive Master angeschlossene Netzphase eines Wechselspannungsnetzes. Eine Hauptstelle kann über die Nebenstellenleitung mit mehreren Nebenstellentastern oder elektronischen Nebenstellengeräten gleichzeitig verbunden werden. Dabei erfolgt der Signalfluss über die Nebenstellenleitung unidirektional, d. h. es können lediglich Signale von der Nebenstelle in Richtung zur Hauptstelle respektive zum Master gesendet werden. Das Nebenstellensignal wird meistens in Form einer geschalteten Netzspannung erzeugt. Es ist dabei nur eine binäre Information übertragbar, d. h. Nebenstellenspannung EIN/AUS, bestenfalls kann der Informationsgehalt über verschieden lange Signalzeiten gesteigert werden.

Der Erfindung liegt die Aufgabe zugrunde, ein optimiertes Master/Slave-System mit mindestens zwei Bewegungsmelder-Einheiten anzugeben.

Des Weiteren soll ein Verfahren zum Betrieb eines solchen Master/Slave Systems angegeben werden.

Diese Aufgabe wird gelöst durch ein Master/Slave-System
- mit einer ersten Bewegungsmelder-Einheit mit einem Master und einem Bewegungsmelder, wobei der Master an die Netzphase eines Wechselspannungsnetzes angeschlossen ist und eine Lastschalteinheit zum Schalten respektive Dimmen eines externen elektrischen Verbrauchers, insbesondere Beleuchtungseinheit, Jalousiemotor oder Lüfter, aufweist,
- mit mindestens einer zweiten Bewegungsmelder-Einheit mit einem Slave als aktive Nebenstelle, wobei der Slave an die Netzphase und den Nulleiter des Wechselspannungsnetzes angeschlossen ist sowie über eine Nebenstellenleitung mit dem Master verbunden ist,
- wobei der Master eine in Form eines Spannungssignalsenders ausgebildete Master-Sendestufe zur Übermittlung eines dem aktuellen Schaltzustandes der Beleuchtungseinrichtung entsprechenden Signals aufweist,
- wobei der Master eine in Form eines Stromsignalempfängers ausgebildete Master-Empfangsstufe für den Empfang von Signalen der mindestens einen Nebenstelle aufweist,
- wobei der Slave eine in Form eines Spannungssignalempfängers ausgebildete Slave-Empfangsstufe für den Empfang eines dem aktuellen Schaltzustand der Beleuchtungseinrichtung entsprechenden Signals aufweist und
- wobei der Slave eine in Form eines Stromsignalsenders ausgebildete Slave-Sendestufe zur Übermittlung von Signalen zur Ansteuerung des Masters aufweist.

Die Aufgabe wird gelöst durch ein Verfahren zum Betrieb eines Master/Slave-Systems,
- wobei Signale in Form einer asynchronen seriellen Datenübertragung über die Nebenstellenleitung mit der Netzphase als Bezugspotential übertragen werden,
- wobei im Ruhezustand, bei welchem keine Datenübertragung erfolgt, permanent der logische Zustand "High" vorliegt, bei welchem eine vorgegebene positive Gleichspannung zwischen der Nebenstellenleitung und der Netzphase anliegt und
- wobei die Übertragung von Datenbits in Form des logischen Zustands "Low" im "Pull-Down-Verfahren" erfolgt, bei welchem die anliegende Gleichspannung auf Massepotential gezogen wird.

Die mit der Erfindung erzielbaren Vorteile bestehen insbesondere darin, dass eine bidirektionale Übertragung von Signalen (Daten, Informationen, Befehlen) zwischen der einzigen Hauptstelle respektive dem Master und einer oder mehreren Nebenstelle(n) respektive dem (den) Slave(s) möglich ist, ohne dass sich dabei der Installationsaufwand erhöht. Dabei kann der Informationsgehalt der Signale bei minimaler Protokolldauer erweitert werden. Der zusätzliche technologische Aufwand für die Realisierung der Nebenstellen-Elektronik (Mikroprozessor) ist weit unterhalb bekannter Bussysteme, wie Powernet oder EIB, angesiedelt. Die zusätzliche Verwendung von einfach aufgebauten mechanischen Tastern als passive Nebenstellen ist weiterhin möglich.

Ein Vorteil des vorgeschlagenen Master/Slave-Systems mit mehreren Bewegungsmeldern und bidirektionaler Nebenstellenkommunikation ist die Möglichkeit, dass der Master eine Rückmeldung über den augenblicklichen Schaltzustand eines von ihm angesteuerten elektrischen Verbrauchers in Form eines Signals an den Slave oder an die Slaves übermitteln kann. Damit wird es ermöglicht, das für einen Bewegungsmelder wichtige Einschaltkriterium "Umgebungshelligkeit" an jedem Montageort, gleichgültig ob Master oder Slave, unabhängig voneinander parametrieren zu können.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1, 2: zwei Ausführungsbeispiele eines Master/Slave-Systems mit jeweils mindestens zwei Bewegungsmelder-Einheiten,
- Fig. 3: eine detaillierte Schaltungsanordnung zum Ausführungsbeispiel gemäß Fig. 1,
- Fig. 4, 5: zwei Skizzen zur Verdeutlichung der Arbeitsweise einer Slave-Sendestufe.

Die Erfindung beruht auf einer asynchronen seriellen Datenübertragung in Form von Signalen über eine Nebenstellenleitung IO mit der Netzphase L eines Wechselspannungsnetzes als Bezugspotential. Im Ruhezustand (keine Datenübertragung, logischer Zustand dauernd logisch "High") liegt zwischen Nebenstellenleitung IO und Netzphase L eine Gleichspannung von ca. 18 bis 26V - vorzugsweise 24V - an. Die Übertragung von Datenbits (logisch "Low") erfolgt im Pull-Down-Verfahren, d. h. die anliegende Gleichspannung wird gegen 0V respektive Massepotential gezogen. Als Datenformat kann beispielsweise das bei Mikroprozessoren einfach verarbeitbare UART-Format verwendet werden, mit einem Startbit, acht Datenbits, Parity-Bit und Stopp-Bit mit einer Datenrate von 600 Baud.

Aufgrund der elektrischen Verhältnisse auf Netzleitungen (transiente Störungen) und einer Leitungslänge von bis zu einhundert Metern sind Störungen bei der Signalübertragung (Datenübertragung) zu erwarten. Beispielsweise kann ein zwischen Netzphase L und Nebenstellenleitung IO geschalteter Nebenstellentaster eine laufende Datenübertragung stören. Im Folgenden werden Daten auch als Befehle oder allgemein als Signale bezeichnet.

Folgende Möglichkeiten zur Vermeidung von Datenverlust bei der SignalÜbertragung sind in Form eines geeigneten Software-Protokolls vorgesehen:
a) zyklische Wiederholung von Befehlen (Signalen) mit niedriger zeitlicher Priorität.
b) Rückmeldebefehle (Acknowledge-Signale) für Befehle (Signale) mit hoher zeitlicher Priorität. Befehlswiederholung bei negativem oder fehlendem Acknowledge-Signal.
c) Gegebenenfalls ist eine automatische Synchronisierungsprozedur zu entwerfen, die (einmal initiiert) ein Zeitfenster für jeden Slave und den Master bereitstellt und somit asynchrone Datenkollision verhindert.
d) Bit-Redundanz und zusätzlich Hamming-Codierung, fehlerhafte Bits können rekonstruiert werden.

Im Folgenden wird die einzige Hauptstelle stets als Master und die aktive(n) Nebenstelle(n) wird (werden) als Slave(s) bezeichnet. Es ist ein Master/Slave-System vorgesehen, mit generell einem Master und einem Slave bis zu acht parallel geschalteten Slaves (aktive Nebenstellen). Darüber hinaus ist mindestens ein Nebenstellentaster als passive Nebenstelle einsetzbar.

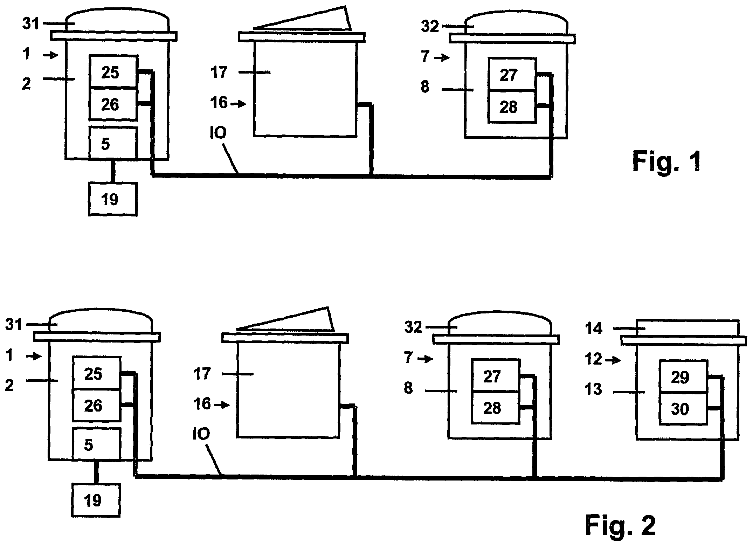

In Fig. 1 ist ein erstes Ausführungsbeispiel dargestellt,
- mit einer ersten Bewegungsmelder-Einheit 1, bestehend aus einem UP-(Unterputz)-Dimmer als Master 2 mit aufgestecktem Bewegungsmelder 31,
- mit einer zweiten Bewegungsmelder-Einheit 7, bestehend aus einem Slave 8 (aktive Nebenstelle) mit aufgestecktem Bewegungsmelder 32,
- mit einem einen mechanischen Taster 17 aufweisenden Nebenstellentaster 16 als passive Nebenstelle.

Diese drei Einheiten 1, 7, 16 sind in einer Hausinstallation entfernt voneinander jeweils in Unterputzdosen montiert, über herkömmliche Installationsleitungen (Netzphase L, Nulleiter N) untereinander verbunden und mit Spannung versorgt. Insbesondere sind diese drei Einheiten 1, 7, 16 an eine Nebenstellenleitung IO angeschlossen. Der Master 2 schaltet mit seiner Lastschalteinheit 5 ausgangsseitig einen elektrischen Verbraucher 19, insbesondere eine Beleuchtungseinheit oder einen Jalousiemotor oder einen Lüfter als Last.

Die Vernetzung von mehreren Bewegungsmelder-Einheiten 1, 7 mit Wirkung auf einen gemeinsamen elektrischen Verbraucher 19 ist sinnvoll, wenn die Reichweite eines einzigen Bewegungsmelders für die vorliegende Raumgröße zu gering ist oder der Grundriss der Räumlichkeit es erfordert, wie dies beispielsweise bei einem verwinkelten Treppenhaus der Fall ist.

Ein entscheidender Vorteil des vorgeschlagenen Master/Slave-Systems mehrerer Bewegungsmelder-Einheiten 1, 7 mit bidirektionaler Nebenstellenkommunikation ist die Möglichkeit, dass der Master 2 eine Rückmeldung über seinen momentanen Schaltzustand "Licht-Ein" oder "Licht-Aus" des elektrischen Verbrauchers 19 in Form von Signalen (Spannungssignalen) an den Slave 8 oder an die Slaves übermitteln kann. Damit ist es möglich, das Einschaltkriterium "Umgebungshelligkeit" an jedem Montageort, egal ob Master 2 oder Slave 8, unabhängig voneinander parametrieren zu können. Das Einsschaltkriterium "Umgebungshelligkeit" wird dabei allgemein mittels einer Dämmerungseinstellung vorgegeben, mit welcher der Lichtwert festgelegt wird, bei dem das Gerät seine Funktion aufnehmen soll. Es können beliebige Schwellen der Umgebungshelligkeit gewählt werden, um derart festzulegen, ob das Gerät auch bei Tag arbeiten soll oder ob das Gerät lediglich bei Finsternis seine Funktion aufnehmen soll:
- Master 2 hat den Schaltzustand "Licht-Aus": Am Master 2 wird mittels des Bewegungsmelders 31 Bewegung erkannt und wenn das Helligkeitskriterium "Umgebungshelligkeit" am Master 2 erfüllt ist (d. h. wenn es ausreichend dunkel ist und der Bewegungsmelder daher in Funktion ist), wird der elektrische Verbraucher 19 über die Lastschalteinheit 5 vom Master 2 eingeschaltet. Daraufhin wird ein Signal "Licht-Ein-Information" über eine in Form eines Spannungssignalsenders respektive einer Spannungssignal-Ausgangsstufe ausgebildete Master-Sendestufe 25 vom Master 2 über die Nebenstellenleitung IO an eine in Form eines Spannungssignalempfängers respektive einer Spannungssignal-Eingangsstufe ausgebildete Slave-Empfangsstufe 28 des Slaves 8 (sowie gegebenenfalls an die Slave-Empfangsstufen weiterer vorhandener Slaves) gesendet.
- Master 2 hat den Schaltzustand "Licht-Aus": An einem Slave 8 wird mittels des Bewegungsmelders 32 Bewegung erkannt und wenn das Helligkeitskriterium "Umgebungshelligkeit" am Slave 8 erfüllt ist (d. h. wenn es ausreichend dunkel ist), wird über eine in Form eines Stromsignalsenders respektive einer Stromsignal-Ausgangsstufe ausgebildete Slave-Sendestufe 27 und die Nebenstellenleitung IO ein Signal "Einschalt-Befehl" an eine in Form eines Stromsignalempfängers respektive einer Stromsignal-Eingangsstufe ausgebildete Master-Empfangsstufe 26 des Masters 2 gesendet. Daraufhin wird der elektrische Verbraucher 19 vom Master 2 über die Lastschalteinheit 5 eingeschaltet.
- Master 2 hat den Schaltzustand "Licht-Ein": An einem Slave 8 wird mittels des Bewegungsmelders 32 Bewegung erkannt und ein Signal "Nachtrigger-Befehl" (Stromsignal) wird über die Slave-Sendestufe 27 an die Master-Empfangsstufe 26 des Masters 2 gesendet. Aufgrund des dem Slave 8 vorliegenden Signals "Licht-Ein" wird dabei das Helligkeitskriterium "Umgebungshel-ligkeit" ("ist es ausreichend dunkel?") am beteiligten Slave 8 nicht berücksichtigt.

Durch den vorgesehenen Nebenstellentaster 16 (passive Nebenstelle) kann zusätzlich zu der und unabhängig von der vorstehend erläuterten automatischen Bewegungsmelderfunktionalität eine manuelle Schaltzustandsänderung des elektrischen Verbrauchers 19 vorgenommen werden, d. h. das Signal "Einschalt-Befehl" gelangt über die Nebenstellenleitung IO zur Master-Empfangsstufe 26. Daraufhin erfolgt das Einschalten des elektrischen Verbrauchers 19 über die Lastschalteinheit 5.

In Fig. 2 ist ein zweites Ausführungsbeispiel dargestellt,
- mit der ersten Bewegungsmelder-Einheit 1, bestehend aus dem UP-(Unterputz)-Dimmer als Master 2 mit aufgestecktem Bewegungsmelder 31,
- mit der zweiten Bewegungsmelder-Einheit 7, bestehend aus dem Slave 8 mit aufgestecktem Bewegungsmelder 32,
- mit einer Timer-Einheit 12, bestehend aus einem Slave 13 mit aufgestecktem Timer-Bedienelement 14,
- mit dem einen Taster 17 aufweisenden Nebenstellentaster 16 (passive Nebenstelle).

Diese vier Einheiten 1,7, 12, 16 sind in einer Hausinstallation entfernt voneinander jeweils in Unterputzdosen montiert und über herkömmliche Installationsleitungen (Netzphase L, Nulleiter N) untereinander verbunden und mit Spannung versorgt. Insbesondere sind diese vier Einheiten 1, 7, 12, 16 an eine Nebenstellenleitung IO angeschlossen. Der Master 2 schaltet mit seiner Lastschalteinheit 5 ausgangsseitig den elektrischen Verbraucher 19 als Last.

Ausgehend vom Ausführungsbeispiel gemäß Fig. 1 ist demnach beim Beispiel gemäß Fig. 2 zusätzlich ein Unterputz-Slave 13 mit aufgestecktem Timer-Bedienelement 14 vorgesehen. Das Timer-Bedienelement 14 ist vom Endanwender programmiert und generiert unabhängig voneinander zwei Zeitzonen A und B. Die Information, ob Zeitzone A und/oder Zeitzone B oder keine von beiden gerade aktiv ist, wird in Form zyklischer Signale (Stromsignale) "Zeitzonen-Befehle" von einer Slave-Sendestufe 29 an die Master-Empfangsstufe 26 des Masters 2 gesendet. Diese Signalübertragung bewirkt Folgendes:
- Während der aktiven Zeitzone A erfolgt durch den Master 2 keine vollständige Abschaltung des elektrischern Verbrauchers 19, wenn keine Bewegung im Bewegungsmelder-Erfassungsbereich detektiert wird oder wenn die Nachlaufzeit abgelaufen ist. Vielmehr wird in einem solchen Fall die Helligkeit der Beleuchtungsanlage 19 vom Wert "volle Helligkeit" auf einen vom Anwender festgelegten mittleren bis niedrigeren Helligkeitswert abgesenkt. Bei Detektion einer Bewegung wird automatisch wieder auf den Wert "volle Helligkeit" hochgedimmt, was durch die Lastschalteinheit 5 erfolgt. Ein Anwendungsfall hierzu ist beispielsweise die Beleuchtung eines Hotelflurs, wobei vorteilhaft verhindert wird, dass Hotelgäste während der Zeitzone A in einen dunklen, unbeleuchteten Flur eintreten müssen.
- Während der aktiven Zeitzone B erfolgt durch den Master 2 nach Detektion einer Bewegung im Bewegungsmelder-Erfassungsbereich keine Einschaltung des elektrischen Verbrauchers 19 auf den Wert "volle Helligkeit", sondern lediglich auf einen vom Anwende festgelegten mittleren Helligkeitswert, was durch die Lastschalteinheit 5 erfolgt. Ein Anwendungsfall hierzu ist beispielsweise die Beleuchtung des Flurbereiches einer Privatwohnung, wobei vorteilhaft verhindert wird, dass Bewohner bei einem nächtlichem Gang vom Schlafzimmer zur Toilette im besagten Zeitraum (Zeitzone B) von der angesteuerten Flurbeleuchtung (elektrischer Verbraucher 19) mit voller Helligkeit geblendet werden.

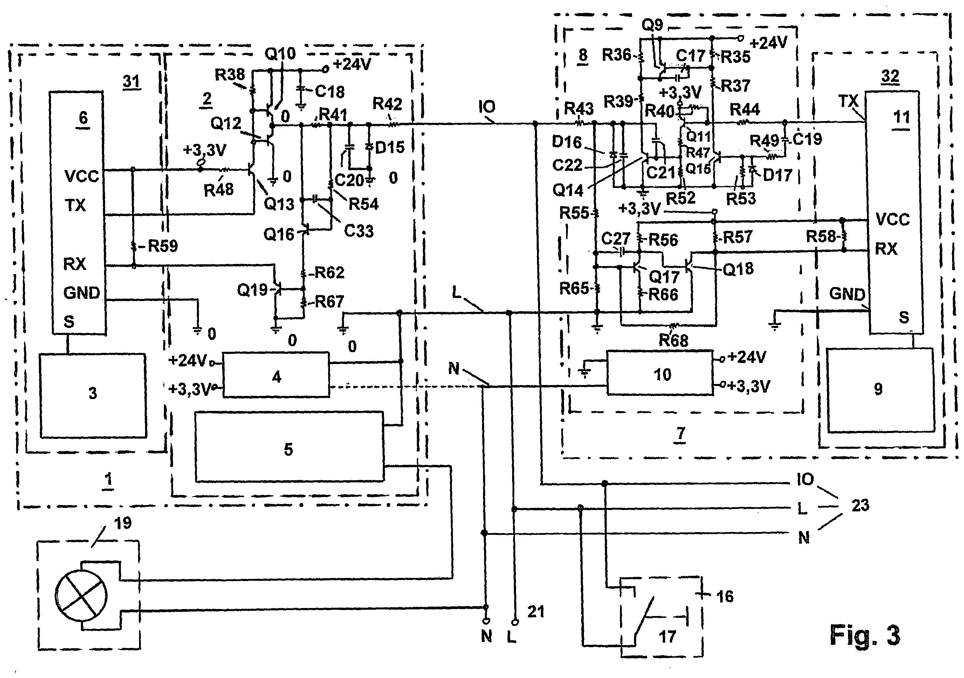

In Fig. 3 ist eine detaillierte Schaltungsanordnung zum Ausführungsbeispiel gemäß Fig. 1 dargestellt. Es sind zu erkennen:
- eine erste Bewegungsmelder-Einheit 1 mit Master 2 und darauf aufgestecktem Bewegungsmelder 31, welcher eine Bewegungsmelder-Sensorik 3 und einen Mikroprozessor 6 aufweist,
- eine zweite Bewegungsmelder-Einheit 7 mit Slave 8 und darauf aufgestecktem Bewegungsmelder 32, welcher eine Bewegungsmelder-Sensorik 9 und einen Mikroprozessor 11 aufweist,
- einen Nebenstellentaster 16 (passive Nebenstelle) mit Taster 17,
- einen elektrischen Verbraucher 19, hier Beleuchtungseinheit.

Die Anschlüsse der Mikroprozessoren 6, 11 sind (wie allgemein üblich) wie folgt bezeichnet:
- VCC:: Versorgungsspannungs-Anschluss
- TX:: Sende-Ausgang eines Mikroprozessors
- RX:: Empfangs-Eingang eines Mikroprozessors
- GND:: Masse-Anschluss (Bezugspotential)
- S:: Sensorsignal-Eingang eines Mikroprozessors.

Widerstände sind allgemein mit R und einer nachfolgenden Ziffer, Kondensatoren mit C und einer nachfolgenden Ziffer, Transistoren mit Q und einer nachfolgenden Ziffer und Dioden mit D und einer nachfolgenden Ziffer bezeichnet. Als Zuleitungen 21 sind die Netzphase L des Wechselspannungsnetzes mit dem Master 2, dem Slave 8 und dem Nebenstellertaster 16 verbunden sowie der Nulleiter N des Wechselspannungsnetzes mit dem Slave 8, dem elektrischen Verbraucher 19 und optional mit dem Master 2 verbunden. Die Nebenstellenleitung IO ist mit dem Master 2, dem Slave 8 und dem Nebenstellentaster 16 verbunden. Des Weiteren dient eine Verbindung 23 mit Netzphase L, Nulleiter N und Nebenstellenleitung IO zum Anschluss weiterer Slaves (aktive Nebenstellen) oder Nebenstellentastern (passive Nebenstellen).

Der Master 2 weist ein Netzteil 4 und eine Lastschalteinheit 5 auf, welche beispielsweise in Form eines Relais oder eines Halbleiterschalters (Dimmer) ausgebildet sein kann und einerseits mit der Netzphase L sowie andererseits mit dem elektrischen Verbraucher 19 verbunden ist. Slave 7 weist ein Netzteil 10 auf. Als Versorgungsspannungen erzeugen die Netzteile 5, 10 vorzugsweise +24V und +3,3V.

Aus Gründen der Störsicherheit und der geringen, zur Verfügung stehenden Energie zum Betrieb der Elektronik sind die entsprechenden Sendeeinheiten und Empfangseinheiten wie folgt aufgebaut:
Im Master 2 wirkt eine niederohmige Gegentaktstufe, bestehend aus zwei Transistoren Q10 / Q12 als Datensender (Spannungssignalssender, Spannungssignal-Ausgangsstufe) respektive Master-Sendestufe - siehe Ziffer 25 in den Fig. 1 und 2. Ein Shunt-Widerstand R41 in Verbindung mit zwei Transistoren Q16 und Q19 wirkt als Master-Empfangsstufe (Stromsignalempfänger, Stromsignal-Eingangsstufe)-siehe Ziffer 26 in den Fig. 1 und 2. Die Master-Sendestufe sendet ein Spannungssignal. Der PTC-Widerstand R42 im Zuge der Nebenstellenleitung IO wirkt in Verbindung mit der Z-Diode D15 als Schutzelement gegen Fehlanschluss (versehentliches Aufschalten der vollen 230V Netzspannung auf die Nebenstellenleitung IO) und gegen transiente, energiereiche Störimpulse (Surge).

Im Slave 8 arbeitet ein Transistor Q14 in Verbindung mit dem aus zwei Widerständen R39 + R36 gebildeten Gesamt-Arbeitswiderstand als "Pull-Down-Ausgangsstufe" respektive Slave-Sendestufe (Stromsignalsender, Stromsignal-Ausgangsstufe) - siehe Ziffern 27, 29 in den Fig. 1 und 2. Im Sendefall wird zum Zeitpunkt der positiven Flanke des Ausgangssignals ein Transistor Q9 zugeschaltet, so dass sich die Ausgangsimpedanz entsprechend um den Widerstand R36 verringert. Die Ausgangsimpedanz entspricht somit
- bei der Aussendung eines "Low-Bits" einem Widerstand R43 und
- bei einem "High-Bit" der Summe beider Widerstände R43 und R39.

Die vorgeschlagene Auslegung der Slave-Sendestufe (siehe Ziffern 27, 29 in den Fig. 1 und 2) hat den Vorteil, dass im Sendefall eine ausreichend geringe Ausgangsimpedanz vorliegt, um ein Signal über die auftretenden Netzimpedanzen (Leitungskapazitäten) übertragen zu können. Im Gegensatz dazu stellt die Slave-Sendestufe im Ruhezustand (Standby-Zustand) eine möglichst große Eingangssimpedanz dar, nämlich die Summe beider Widerstände R36 + R39, um die Sendesignale der parallel geschalteten Teilnehmer (ein Master 2 und ein Slave 8 oder auch mehrere Slaves) nur minimal zu belasten und um die Stromaufnahme der Slave-Sendestufe 27, 29 im Sende-Zustand zu minimieren.

Die Slave-Sendestufe (siehe Ziffer, 27, 29 in den Fig. 1 und 2) wirkt in der vorliegenden Anordnung auf die niederohmige Ausgangsstufe des Masters 2 als Stromsendestufe respektive Stromsignalsender. Der Sendestrom wird hauptsächlich begrenzt
- bei einem "High-Bit" durch die Widerstände R42 + R43 + R39,
- bei einem "Low-Bit" durch die Widerstände R42 + R43.

Die Slave-Empfangsstufe 28, 30 (Spannungssignal-Empfänger, Spannungssignal-Eingangsstufe) wird im Wesentlichen durch die beiden einen Schmitt-Trigger bildenden Transistoren Q17, Q18 sowie die beiden einen Eingangsspannungsteiler bildenden Widerstände R55, R65 gebildet.

Der PTC-Widerstand R43 wirkt in Verbindung mit einer Z-Diode D16 als Schutzelement gegen Fehlanschluss (versehentliches Aufschalten der vollen 230V Netzspannung auf die Nebenstellenleitung IO) und gegen transiente, energiereiche Störimpulse (Surge).

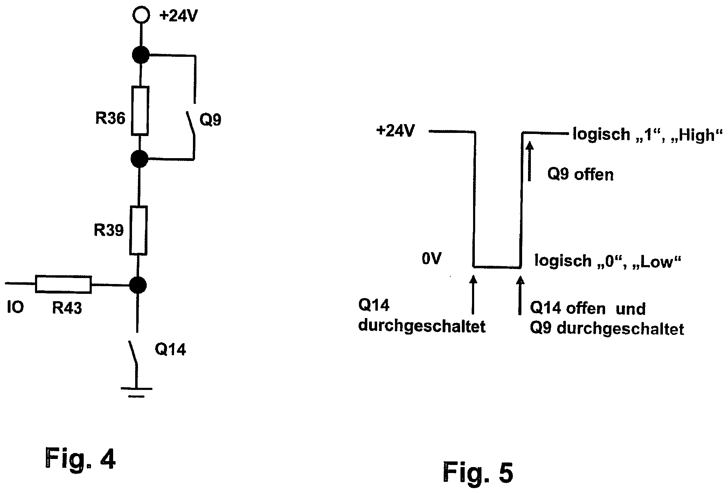

In den Fig. 4 und 5 sind zwei Skizzen zur Verdeutlichung der Arbeitsweise einer Slave-Sendestufe 27, 29 dargestellt. Fig. 4 zeigt den interessierenden Schaltungs-Ausschnitt der Slave-Sendestufe 27, 29 aus Fig. 3 mit den beiden Transistoren Q9, Q14 und den Widerständen R36, R39, R43. Fig. 5 zeigt einen logischen "1" - "0"-"1" - Übergang. Im Ruhezustand sind die beiden Transistoren Q9, Q14 offen und die Nebenstellenleitung IO liegt über den Widerständen R43, R39, R36 an der vorgegebenen, positiven Gleichspannung respektive Versorgungsspannung +24V, was dem logischen Zustand "1" bzw. "High" entspricht. Zum Senden wird zunächst Transistor Q14 durchgeschaltet (negative Flanke des Ausgangssignals), folglich liegt die Nebenstellenleitung IO über dem Widerstand R43 auf Massepotential bzw. 0V, was dem logischen Zustand "0" bzw. "Low" entspricht. Nach Ablauf einer vorgegebenen Zeitspanne wird Transistor Q14 geöffnet und gleichzeitig Transistor Q9 durchgeschaltet (positive Flanke des Ausgangssignals), folglich liegt die Nebenstellenleitung IO über den Widerständen R43, R39 relativ rasch wieder an der Versorgungsspannung +24V. Kurze Zeit nach der positiven Flanke wird Transistor Q9 geöffnet, um wiederum den verlustarmen Ruhezustand zu erreichen.

### Bezugszeichenliste

- 1: erste Bewegungsmelder-Einheit
- 2: Master
- 3: Bewegungsmelder-Sensorik
- 4: Netzteil
- 5: Lastschalteinheit (Relais oder Halbleiterschalter)
- 6: erster Mikroprozessor
- 7: zweite Bewegungsmelder-Einheit
- 8: Slave (aktive Nebenstelle)
- 9: Bewegungsmelder-Sensorik
- 10: Netzteil
- 11: zweiter Mikroprozessor
- 12: Timer-Einheit
- 13: Slave
- 14: Timer-Bedienelement (aufgesteckt)
- 15: ---
- 16: Nebenstellentaster (passive Nebenstelle)
- 17: mechanischer Taster
- 18: ---
- 19: elektrischer Verbraucher, insbesondere Beleuchtungseinheit, Jalousiemotor, Lüfter
- 20: ---
- 21: Zuleitung: L, N
- 22: ---
- 23: Verbindung zu weiteren Slaves oder Nebenstellentastern: IO, L, N
- 24: ---
- 25: Master-Sendestufe
- 26: Master-Empfangsstufe
- 27: Slave-Sendestufe
- 28: Slave-Empfangsstufe
- 29: Slave-Sendestufe
- 30: Slave-Empfangsstufe
- 31: erster Bewegungsmelder
- 32: zweiter Bewegungsmelder

- IO: Nebenstellenleitung
- L: Netzphase
- N: Nulleiter

## Patentansprüche

1. Master/Slave-System
• mit einer ersten Bewegungsmelder-Einheit (1) mit einem Master (2) und einem Bewegungsmelder (31), wobei der Master (2) an die Netzphase (L) eines Wechselspannungsnetzes angeschlossen ist und eine Lastschalteinheit (5) zum Schalten respektive Dimmen eines als Beleuchtungseinheit (19) oder Ja-lousiemotor ausgeführten externen elektrischen Verbrauchers (19, aufweist,
• mit mindestens einer zweiten Bewegungsmelder-Einheit (7) mit einem Slave (8) als aktive Nebenstelle, wobei der Slave (8) an die Netzphase (L) und den Nulleiter (N) des Wechselspannungsnetzes angeschlossen ist sowie über eine Nebenstellenleitung (IO) mit dem Master (2) verbunden ist,
• wobei der Master (2) eine in Form eines Spannungssignalsenders ausgebildete Master-Sendestufe (25) zur Übermittlung eines dem aktuellen Schaltzustand der Beleuchtungseinrichtung (9) entsprechenden Signals aufweist, die als niederohmige Gegentaktstufe (Q10/Q12) ausgeführt ist,
• wobei der Master (2) eine in Form eines Stromsignalempfängers ausgebildete Master-Empfangsstufe (26) für den Empfang von Signalen der mindestens einen Nebenstelle aufweist, die als Shunt-Widerstand (R41) in Verbindung mit zwei Transistoren (Q16, Q19) ausgeführt ist,
• wobei der Slave (8) eine in Form eines Spannungssignalempfängers ausgebildete Slave-Empfangsstufe (28, 30) für den Empfang eines dem aktuellen Schaltzustand der Beleuchtungseinheit (19) oder des Jalousiemotors (19) entsprechenden Signals aufweist,
• wobei der Slave (8) eine in Form eines Stromsignalsenders ausgebildete Slave-Sendestufe (27, 29) zur Übermittlung von Signalen zur Ansteuerung des Masters (2) aufweist, die als "Pull-Down-Ausgangsstufe" arbeitet und einen Transistor (Q14) in Verbindung mit einem Gesamtarbeitswiderstand (R39, R36) aufweist, und
• wobei im Master (2) und Slave (8, 13) jeweils ein PTC-Widerstand (R42, R43) in Verbindung jeweils mit einer Z-Diode (D15, D16) als Schutzelemente gegen einen Fehlanschluss und gegen transiente, energiereiche Störimpulse wirken.

2. Master/Slave-System nach Anspruch 1, **dadurch gekennzeichnet, dass** mindestens eine Timer-Einheit (12) mit einem Slave (13) als aktive Nebenstelle vorgesehen ist.

3. Master/Slave-System nach einem der vorstehenden Ansprüche, **gekennzeichnet durch** mindestens einen Nebenstellentaster (16) als passive Nebenstelle.

4. Verfahren, welches mittels eines Master/Slave-Systems nach einem der vorstehenden Ansprüche ausgeführt wird, **dadurch gekennzeichnet,**
• **dass** Signale in Form einer asynchronen seriellen Datenübertragung zwischen Master (2) und Slave (8) über die Nebenstellenleitung (IO) mit der Netzphase (L) als Bezugspotential übertragen werden,
• **dass** im Ruhezustand, bei welchem keine Datenübertragung zwischen Master (2) und Slave (8) erfolgt, permanent der logische Zustand "High" vorliegt, bei welchem eine vorgegebene positive Gleichspannung zwischen der Nebenstellenleitung (IO) und der Netzphase (L) anliegt, und
• **dass** die Übertragung von Datenbits zwischen Master (2) und Slave (8) in Form des logischen Zustands "Low" im "Pull-Down-Verfahren" erfolgt, bei welchem die anliegende Gleichspannung auf Massepotential (0V) gezogen wird.

5. Verfahren nach Anspruch 4 **dadurch gekennzeichnet, dass** die SlaveSendestufe (27) auf die niederohmige Ausgangsstufe des Masters (2) als Stromsendestufe zur Übertragung von Stromsignalen wirkt.

6. Verfahren nach Anspruch 4, **dadurch gekennzeichnet, dass** zur Vermeidung von Datenverlust eine zyklische Wiederholung von Signalen mit niedriger zeitlicher Priorität erfolgt.

7. Verfahren nach Anspruch 4, **dadurch gekennzeichnet, dass** zur Vermeidung von Datenverlust Rückmeldebefehle für Signale mit hoher zeitlicher Priorität erzeugt werden und dass eine Signalwiederholung bei negativem oder ausbleibendem Rückmeldebefehl erfolgt.

8. Verfahren nach Anspruch 4, **dadurch gekennzeichnet, dass** zur Vermeidung von Datenverlust eine einmalige, automatische Synchronisierprozedur erfolgt, welche jeweils Zeitfenster für den Master (2) und die Slaves (8, 13) bereitstellt.

9. Verfahren nach Anspruch 4, **dadurch gekennzeichnet, dass** zur Vermeidung von Datenverlust eine Hamming-Codierung erfolgt, mit welcher fehlerhafte Bits rekonstruiert werden können.

## Claims

1. Master/slave system
• having a first movement-sensor unit (1) having a master (2) and a movement sensor (31), wherein the master (2) is connected to the mains phase (L) of an AC voltage mains system and has a load switching unit (5) for switching and/or dimming an external electrical load (19) configured as a lighting unit (19) or a blinds motor,
• having at least one second movement-sensor unit (7) having a slave (8) as an active subsidiary, wherein the slave (8) is connected to the mains phase (L) and to the neutral conductor (N) of the AC voltage mains system, and is connected via a subsidiary line (10) to the master (2),
• wherein the master (2) has a master transmitting stage (25), which is in the form of a voltage signal transmitter, for transmission of a signal which corresponds to the instantaneous switching state of the lighting device (9), which stage is configured as a low-impedance push-pull stage (Q10/Q12),
• wherein the master (2) has a master receiving stage (26), which is in the form of a current signal receiver, for reception of signals from the at least one subsidiary, which stage is configured as a shunt resistor (R41) connected to two transistors (Q16, Q19),
• wherein the slave (8) has a slave receiving stage (28, 30), which is in the form of a voltage signal receiver, for reception of a signal which corresponds to the instantaneous switching state of the lighting unit (19) or of the blinds motor (19),
• wherein the slave (8) has a slave transmitting stage (27, 29), which is in the form of a current signal transmitter, for transmission of signals for operating the master (2), which stage operates as a "pull-down output stage" and has a transistor (Q14) in conjunction with a total working resistance (R39, R36), and
• wherein a respective PTC thermistor (R42, R43) acts in conjunction with a respective zener diode (D15, D16) as protection elements against incorrect connection and against transient, high-energy surges in the master (2) and slave (8, 13).

2. Master/slave system according to Claim 1, **characterized in that** at least one timer unit (12) is provided, having a slave (13) as an active subsidiary.

3. Master/slave system according to one of the preceding claims, **characterized by** at least one subsidiary pushbutton (16) as a passive subsidiary.

4. Method which is carried out by means of a master/slave system according to one of the preceding claims, **characterized**
• **in that** signals are transmitted in the form of an asynchronous serial data transmission between master (2) and slave (8) via the subsidiary line (10), with the mains phase (L) as a reference potential,
• **in that**, in the rest state, in which no data is transmitted between master (2) and slave (8), the logic state "high" is permanently present, in which there is a predetermined positive DC voltage between the subsidiary line (10) and the mains phase (L), and
• **in that** data bits are transmitted between master (2) and slave (8) in the form of the logic state "low" using the "pull-down method", in which the applied DC voltage is drawn to earth potential (0V).

5. Method according to Claim 4, **characterized in that** the slave transmitting stage (27) acts on the low-impedance output stage of the master (2) as a current transmitting stage for transmission of current signals.

6. Method according to Claim 4, **characterized in that** signals are repeated cyclically, with low time priority, in order to avoid data loss.

7. Method according to Claim 4, **characterized in that** response commands for signals are produced with high time priority in order to avoid data loss, and **in that** signals are repeated if the response command is negative or absent.

8. Method according to Claim 4, **characterized in that** a single automatic synchronization procedure is carried out in order to avoid data loss, and in each case provides time windows for the master (2) and for the slaves (8, 13).

9. Method according to Claim 4, **characterized in that** Hamming coding, by means of which erroneous bits can be reconstructed, is used to avoid data loss.

## Revendications

1. Système maître/esclave
- doté d'une première unité de détection de mouvement (1) comportant un maître (2) et un détecteur de mouvement (31), dans lequel le maître (2) est connecté à la phase du secteur (L) d'un réseau à tension alternative et une unité de commutation de charge (5) destinée à activer ou à faire varier un consommateur électrique externe (19) réalisé sous la forme d'une unité d'éclairage (19) ou d'un moteur de stores,
- doté d'au moins une deuxième unité de détection de mouvement (7) comportant un esclave (8) en tant que poste auxiliaire actif, dans lequel l'esclave (8) est connecté à la phase du réseau (L) et au conducteur neutre (N) du réseau à tension alternative et est relié par l'intermédiaire d'une ligne de poste auxiliaire (10) au maître (2),
- dans lequel le maître (2) comporte un étage émetteur maître (25) réalisé sous la forme d'un émetteur de signal de tension destiné à transmettre un signal correspondant à l'état de commutation actuel du dispositif d'éclairage (9), lequel étage émetteur maître est réalisé sous la forme d'un étage de type push-pull à faible impédance (Q10/Q12),
- dans lequel le maître (2) comporte un étage récepteur maître (26) réalisé sous la forme d'un récepteur de signal de courant destiné à recevoir des signaux de l'au moins un poste auxiliaire, lequel étage récepteur maître est réalisé sous la forme d'une résistance de dérivation (R41) reliée à deux transistors (Q16, Q19),
- dans lequel l'esclave (8) comporte un étage récepteur esclave (28, 30) réalisé sous la forme d'un récepteur de signal de tension destiné à recevoir un signal correspondant à l'état de commutation actuel de l'unité d'éclairage (19) ou du moteur de stores (19),
- dans lequel l'esclave (8) comporte un étage émetteur esclave (27, 29) réalisé sous la forme d'un émetteur de signal de courant destiné à transmettre des signaux permettant de commander le maître (2), lequel étage émetteur esclave fonctionne en tant qu'"étage de sortie d'excursion basse" et comporte un transistor (Q14) relié à une résistance de fonctionnement globale (R39, R36), et
- dans lequel des résistances PTC (R42, R43) respectives reliées à une diode Zener (D15, D16) fonctionnent en tant qu'éléments de protection contre un branchement erroné et contre des impulsions de courant transitoires intenses dans le maître (2) et l'esclave (8, 13).

2. Système maître/esclave selon la revendication 1, **caractérisé en ce qu'**il est prévu au moins une unité de temporisation (12) comportant un esclave (13) en tant que poste auxiliaire actif.

3. Système maître/esclave selon l'une quelconque des revendications précédentes, **caractérisé par** au moins un bouton-poussoir de poste auxiliaire (16) en tant que poste auxiliaire passif.

4. Procédé mis en oeuvre au moyen d'un système maître/esclave selon l'une quelconque des revendications précédentes, **caractérisé en ce que**
- des signaux sont transmis sous la forme d'une transmission de données série asynchrone entre le maître (2) et l'esclave (8) par l'intermédiaire de la ligne de poste auxiliaire (10) ayant la phase du réseau (L) en tant que potentiel de référence,
- **en ce qu'**un état "Haut" logique permanent est présent dans un état de repos dans lequel aucune transmission de données n'est effectuée entre le maître (2) et l'esclave (8), état dans lequel une tension continue positive prédéterminée est appliquée entre la ligne de poste auxiliaire (10) et la phase du réseau (L), et
- **en ce que** la transmission de bits de données entre le maître (2) et l'esclave (8) est effectuée sous la forme de l'état logique "Bas" conformément à un "procédé d'excursion basse", dans lequel la tension continue appliquée est déterminée en référence à un potentiel de masse (0V) .

5. Procédé selon la revendication 4, **caractérisé en ce que** l'étage émetteur esclave (27) agit sur l'étage de sortie à faible impédance du maître (2) en tant qu'étage émetteur de courant pour transmettre des signaux de courant.

6. Procédé selon la revendication 4, **caractérisé en ce qu'**une répétition cyclique de signaux ayant une faible priorité temporelle est effectuée pour éviter une perte de données.

7. Procédé selon la revendication 4, **caractérisé en ce que** des signaux de rétroaction destinés à des signaux ayant une priorité temporelle plus élevée sont générés pour éviter une perte de données et **en ce qu'**une répétition des signaux est effectuée lorsque l'instruction de rétroaction est négative ou échoue.

8. Procédé selon la revendication 4, **caractérisé en ce qu'**une procédure de synchronisation automatique unique qui fournit une fenêtre temporelle respective pour le maître (2) et les esclaves (8, 13) est effectuée pour éviter une perte de données.

9. Procédé selon la revendication 4, **caractérisé en ce qu'**un codage de Hamming au moyen duquel des bits erronés peuvent être reconstruits est effectué pour éviter une perte de données.
